# EUROPÄISCHE PATENTSCHRIFT

(11) **EP 0 645 920 B1**
(45) Veröffentlichungstag und Bekanntmachung des Hinweises auf die Patenterteilung: **28.10.1998**
(21) Anmeldenummer: 94250190.9
(22) Anmeldetag: 27.07.1994
(51) Int. Cl.: H04L 1/00, H04L 29/14, H03M 13/00

(54) **Verfahren zur einkanaligen Übertragung von Datentelegrammen und Einrichtung zur Durchführung des Verfahrens**
Method and device for one channel transmission of data telegrams
Procédé et dispositif pour la transmission de télégrammes de données par un canal

(30) Priorität: 17.09.1993 DE 4332145
(43) Veröffentlichungstag der Anmeldung: 29.03.1995
(73) Patentinhaber: SIEMENS AKTIENGESELLSCHAFT, 80333 München (DE)
(72) Erfinder: Forstreuter, Horst, Dipl.-Ing., D-38104 Braunschweig (DE); Weitner-von Pein, Achim, Dipl.-Ing., D-38126 Braunschweig (DE)

(56) Entgegenhaltungen:
- DE-A- 3 137 904
- DE-A- 3 601 473
- DE-A- 3 924 266
- DE-B- 2 352 108
- SIGNAL UND DRAHT, Band 58, Heft 11, November 1966 G. GOTTFRIED "Datensicherung" Seiten 177-186

## Beschreibung

Die Erfindung bezieht sich auf ein Verfahren nach dem Oberbegriff des Patentanspruches 1 sowie auf eine Einrichtung zur Durchführung dieses Verfahrens.

Um Daten von einer Quelle zu einer Senke sicher übertragen zu können, ist es bekannt, die Daten zu Datentelegrammen aneinander zu reihen und diese Telegramme entweder mehrfach nacheinander oder aber vorzugsweise gleichzeitig parallel über unterschiedliche Kanäle zur Datensenke zu übertragen. Bei der Datensenke findet dann ein Vergleich der jeweils zusammengehörigen Datentelegramme statt, bei dem etwaige Datenabweichungen in den Telegrammen erkannt werden können. Jedes Datentelegramm besteht aus einer Mehrzahl von bits, die entweder bitseriell oder bitparallel übertragen werden.

Um etwaige Datenverfälschungen auf dem Übertragungsweg feststellen zu können, ist es darüber hinaus bekannt, den eigentlichen Nutzdaten Prüfdaten beizuordnen und diese gemeinsam mit den Nutzdaten zu übermitteln. Die Prüfdaten lassen sich durch Anwendung bestimmter mathematischer Verfahren aus den zu übermittelnden Nutzdaten ableiten. Auf der Empfangsseite des Übertragungssystems werden aus den empfangenen Nutzdaten die zugehörigen Prüfdaten bestimmt und mit den von der Datenquelle übermittelten Prüfdaten verglichen. Inhaltliche Abweichungen zwischen den jeweils zusammengehörigen Prüfdaten führen zu einer Fehlermeldung sowie ggf. zum Verwerfen der übermittelten Nutzdaten (Signal + Draht 1966, Seiten 177-186).

Aus der DE-A-23 52 108 sind in diesem Zusammenhang ein Verfahren und eine Einrichtung der eingangs genannten Art bekannt. Die DE-A-23 52 108 offenbart eine Prüfdatenbildung, die ohne Anderung der Zeichenstruktur die Wirksamkeit der Prüfdaten und damit die Sicherheit der Fehlererkennung erhöht. Dazu bilden jeweils wenigstens zwei Zeichen (Nutzdaten) einer Nachricht eine Sicherungseinheit. Die aus einer Sicherungseinheit gewonnenen Sicherungszeichen werden gleichmäßig auf die Zeichen der Sicherungseinheit verteilt und bilden die Prüfdaten jedes Zeichens.

Um vorübergehende Übertragungsausfälle zu erkennen, bei denen ganze Telegramme verloren gehen können, ist es ferner aus der DE-A 23 52 108 bekannt, den Telegrammen fortlaufende Kennungen z. B. in Form einer Numerierung beizugeben, und deren fortlaufende Folge empfangsseitig zu überwachen. Mit einem derartigen Sicherungsverfahren lassen sich zwar Übertragungsstörungen erkennen, sofern im Anschluß daran weitere Datentelegramme übertragen werden; bilden die ausgefallenen Telegramme aber das Ende eines Telegrammzyklus, so wird die Übertragungsstörung senkeseitig nicht zuverlässig erkannt.

Ferner gibt es weitere umfangreiche Verfahren zur sicheren Datenübertragung, bei denen die jeweilige Datensenke der Datenquelle durch Rückübertragung der übermittelten Nutz- und/oder Prüfdaten den Empfang dieser Daten quittiert. Hie führt die Datenquelle einen Vergleich zwischen den von ihr übermittelten und den an sie zurückgegebenen Daten durch. Ein solches Datenübertragungsverfahren ist jedoch außerordentlich aufwendig und läßt sich sinnvoll nicht verwenden, wenn es darum geht, sehr viele Daten in möglichst kurzer Zeit zu übermitteln.

Aufgabe der Erfindung ist es, ein Verfahren nach dem Oberbegriff des Patentanspruches 1 anzugeben, das es gestattet, die jeweils übermittelten Daten auf Vollständigkeit zu überprüfen, ohne daß es hierzu der Rückübertragung zuvor übermittelter Nutz- und/oder Prüfdaten an die Datenquelle bedarf. Es ist ferner Aufgabe der Erfindung, eine Einrichtung zur Durchführung des Verfahrens anzugeben. Die Erfindung löst diese Aufgabe durch Anwendung der kennzeichnenden Merkmale des Patentanspruchs 1 bzw. des Anspruchs 5.

Vorteilhafte Ausgestaltungen der Erfindung sind in den Unteransprüchen angegeben.

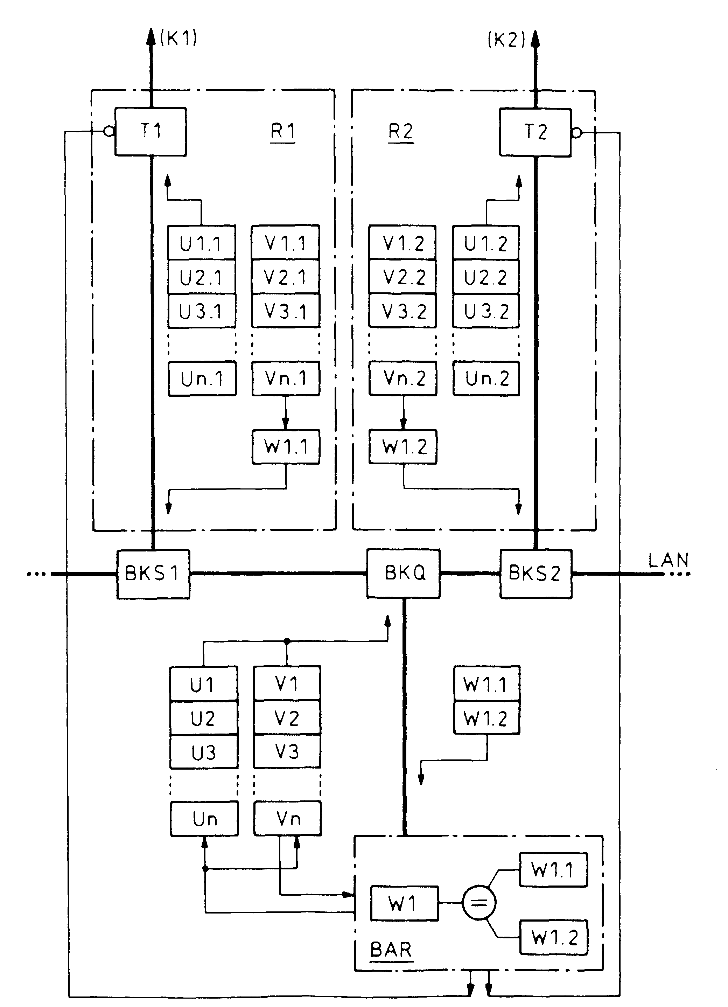

Die Erfindung ist nachstehend anhand eines in der Zeichnung dargestellten Ausführungsbeispieles näher erläutert. Die Zeichnung zeigt schematisch als Datenquelle ein signaltechnisch sicheres Rechnersystem BAR, das die Daten liefert, die an zwei signaltechnisch nicht sichere Rechner R1, R2 übermittelt werden sollen. Bei dem signaltechnisch sicheren Rechnersystem handelt es sich z. B. um ein Doppelrechnersystem wie es unter dem Namen SIMIS bekannt geworden ist. Das signaltechnisch sichere Rechnersystem generiert auf hier nicht zu erläuternde Weise Telegramme und führt sie über eine Buskoppelbaugruppe BKQ einem Bussystem LAN zu, an das die nicht sicheren Rechner R1 und R2 über zugehörige Buskoppelbaugruppen BKS1 und BKS2 angeschlossen sind; über das Bussystem LAN kann das sichere Rechnersystem mit weiteren in der Zeichnung nicht dargestellten Komponenten einer beliebigen Prozeßsteuerung kommunizieren. Die über die Buskoppelbaugruppen zwischen den Rechnern jeweils übermittelten Telegramme sind in der Zeichnung jeweils neben den zu diesen Buskoppelbaugruppen führenden Leitungen angegeben. So übermittelt das sichere Rechnersystem BAR seiner Buskoppelbaugruppe BKQ in beliebiger zeitlicher Folge Telegramme, die jeweils aus Nutzdaten und diesen beigeordneten Prüfdaten bestehen. In der Zeichnung sind die Nutzdaten mit dem Buchstaben U und einer fortlaufenden Nummer und die zugehörigen Prüfdaten mit dem Buchstaben V und der gleichen Nummer gekennzeichnet. Durch die Adressierung der Telegramme an die beiden Rechner R1 und R2 entstehen zwei getrennte Nutz- und Prüfdatenfolgen; diese Nutz- und Prüfdatenfolgen sind in der Zeichnung durch eine beigeordnete, hinter einem Punkt folgende sogenannte Kanalkennung 1 bzw. 2 gekennzeichnet. Während die Nutzdaten in aller Regel einer weiteren Datenverarbeitung zugeführt werden, dienen die Prüfdaten ausschließlich dem Zweck, die Richtigkeit und Vollständigkeit der an die Rechner R1 und R2 übermittelten Daten festzustellen. Hierzu können die jeweils zusammengehörigen Prüfdaten in beiden Rechnern laufend auf Übereinstimmung geprüft werden; beim Erkennen von Datenabweichungen werden vorgegebene Routinen veranlaßt, z. B. die Wiederholung eines oder mehrerer Datentelegramme. Ferner werden die den Nutzdaten beigegebenen Prüfdaten in den nicht sicheren Rechnern R1 und R2 unabhängig voneinander abgespeichert. Zu bestimmten Zeitpunkten, auf die noch einzugehen ist, bilden die nicht sicheren Rechner über die von ihnen seit einem vorangegangenen Prüfvorgang gespeicherten Prüfdaten je ein Summenprüfdatum W1.1 bzw. W1.2 und übermitteln dieses an die Datenquelle. Die Summenprüfdaten werden gebildet, indem die abgespeicherten Prüfdaten wie Nutzdaten betrachtet werden, über die ein Prüfdatum zu erstellen ist. Die Summenprüfdaten bestehen im Gegensatz zu der Vielzahl der jeweils abgespeicherten Prüfdaten jeweils nur aus einem oder einigen wenigen Bytes, sind von ihrem Inhalt her aber durch ein mathematisches Umsetzverfahren mit den zugehörigen Nutzdaten verknüpft, ohne daß allerdings für den Empfänger der Summenprüfdaten erkennbar wäre, aus welchen Prüfdaten die Summenprüfdaten ermittelt wurden und zu welchen Nutzdaten sie gehören. Die aus nur wenigen Bytes bestehenden Summenprüfdaten W1.1 und W1.2 werden dem sicheren Rechner BAR zugeführt und dort verglichen mit einem vom sicheren Rechner nach dem gleichen mathematischen Verfahren ermittelten Summenprüfdatum W1 aus den Prüfdaten V1 bis Vn, die den zuvor ausgesandten Nutzdaten U1 bis Un beigeordnet waren. Die Summenprüfdaten können auch beim Senden/Empfangen der Telegramme gebildet werden, so daß auf eine gesonderte Abspeicherung der Prüfdaten verzichtet werden kann.

Das erfindungsgemäße Verfahren zum Übertragen von Datentelegrammen ermöglicht eine signaltechnisch sichere Datenübertragung, wenn sichergestellt ist, daß auf dem Weg von der Datenquelle zu einem der Rechner etwaige Übertragungsfehler aufgedeckt werden, bevor ein Fehler auf dem Übertragungsweg zum anderen Rechner auftritt, der bei einem späteren Vergleich den Fehler im ersten Kanal überdecken könnte. Aus diesem Grunde muß die erfindungemäße Summenprüfdatenbildung mit anschließendem Summenprüfdatenvergleich innerhalb bestimmter zeitlicher Abstände, der Fehleroffenbarungszeit, durchgeführt werden. Die zulässige Fehleroffenbarungszeit ergibt sich als ein vorzugebendes Bruchteil einer Zeitspanne MTBF (meantime between failures), die sich auf hier nicht zu erläuternde Weise für das übertragungssystem bestimmen läßt.

Wenn das Übertragungssystem in einen Prozeß eingebunden ist, in dem von der weiteren Verarbeitung eines fehlerhaften Datentelegrammes gefährliche Auswirkungen auf den Prozeß ausgehen können, dann ist die Ausgabe eines solchen Kommandos von der vorherigen Summenprüfdatenbildung mit anschließendem Summenprüfdatenvergleich unabhängig vom Ablauf der MTBF abhängig zu machen. Ein solcher Fall liegt beispielsweise vor, wenn die übermittelten Datentelegramme z. B. für eine Sichtgerätesteuerung verwendet werden und ein Bediener aufgrund des jeweils dargestellten Bildes bestimmte Kommandos auszugeben beabsichtigt, die direkt auf den Prozeß wirken, ohne nochmals in einer gesonderten Sicherheitsebene auf ihre Zulässigkeit geprüft worden zu sein. Solche Bedienungshandlungen, die der Bediener gesondert zu autorisieren hat, werden üblicherweise nur in Ausnahmefällen vorgenommen. Der Bediener muß sich zur Ausführung solcher Bedienungshandlungen sicher sein können, daß das ihm auf einem Sichtgerät dargestellte Prozeßbild auch dem tatsächlichen Prozeßgeschehen entspricht. Voraussetzung für die richtige Darstellung des Prozeßgeschehens ist die richtige Übertragung der darzustellenden Daten von der Datenquelle BAR zu den beiden Empfangs-Rechnern R1, R2 der Datensenke. Zum Überprüfen der ordnungsgerechten Datenübertragung werden die von den beiden Rechnern zu diesem Zeitpunkt gespeicherten Prüfdaten zu jeweils einem Summenprüfdatum reduziert und zum Vergleich mit dem bekannten Summenprüfdatum dem signaltechnisch sicheren Rechnersystem zugeführt. Erst wenn dieses Rechnersystem die Übereinstimmung der übermittelten Summenprüfdaten mit dem selbst ermittelten Summenprüfdatum erkannt hat, wird über Torschaltungen T1 und T2, die beim Erkennen solcher freigabepflichtigen Handlungen vom sicheren Rechner BAR her eingestellt wurden, die Ausführung des sicherheitskritischen Kommandos zugelassen. Nicht freigabepflichtige Bedienungshandlungen, deren Zulässigkeit in einer Sicherheitsebene, z. B. der Sicherheitsebene eines Stellwerkes, vor Ausgabe an den Prozeß überprüft werden, werden über die nicht eingestellten Torschaltungen der weiterführenden Datenverarbeitung direkt zugeführt.

In dem dargestellten Ausführungsbeispiel werden die zu übertragenden Datentelegramme zwei getrennten Rechnern zugeführt und der Vergleich der Summenprüfdaten findet in einem signaltechnisch sicheren Rechner statt. Es ist ohne weiteres möglich, die von einer Datenquelle stammenden Telegramme nicht zwei gesonderten Rechnern R1, R2 sondern zwei Kanälen K1, K2 eines gemeinsamen Rechners zuzuführen und dort weiterzuverarbeiten. In diesem Falle werden die Daten vorzugsweise einakanalig, aber mehrmals hintereinander übertragen, im senkeseitigen Rechner verdoppelt und nach ihrer Verdopplung in getrennten Kanälen getrennt weiterbehandelt.

Der Summenprüfdatenvergleich muß nicht notwendigerweise in einem sicheren Rechner an der Datenquelle stattfinden. Er kann auch in gesonderten signaltechnisch sicheren Vergleichern oder auch innerhalb vorzugsweise mehrerer nicht sicherer Rechner stattfinden, die gemeinsam auf den Prozeß wirken und Prozeßausgaben nur freigeben, wenn sie übereinstimmende Summenprüfdaten festgestellt haben.

Das erfindungsgemäße Verfahren ist in gleicher Weise auch anwendbar zur einkanaligen Datenübertragung auf ein (2 v 3) - oder Dreirechnersystem; hier müssen entsprechend mehr Summenprüfdaten gebildet und in den Summenprüfdatenvergleich einbezogen werden.

## Patentansprüche

1. Verfahren zur einkanaligen Übertragung von Datentelegrammen von einer Datenquelle zu einer Datensenke unter quellenseitiger Bereitstellung von aus den Nutzdaten der Datentelegramme errechneten Prüfdaten,
**dadurch gekennzeichnet,**
daß über die an die Datensenke (R1, R2) übermittelten oder die von dieser ermittelten Prüfdaten (V1.1 bis Vn.1, V1.2 bis Vn.2) innerhalb eines vorgebbaren Zeitraumes jeweils ein Summenprüfdatum (W1.1, W1.2) gebildet wird und daß diese Summenprüfdaten von ihrem Inhalt her verglichen werden mit jeweils einem an der Datenquelle (BAR) aus den dort bereitgestellten Prüfdaten (V1 bis Vn) abgeleiteten Summenprüfdatum (W1).

2. Verfahren nach Anspruch 1,
**dadurch gekennzeichnet,**
daß der Summenprüfdatenvergleich zeit- und/oder ereignisgesteuert durchgeführt wird.

3. Verfahren nach Anspruch 2,
**dadurch gekennzeichnet,**
daß in einem System zur bedarfsweisen Ausgabe sicherheitskritischer Kommandos die Ausführung solcher Kommandos u. a. von einer im Rahmen der Kommandoausgabe durchgeführten Ermittlung der Summenprüfdaten mit anschließendem Vergleich der Summenprüfdaten abhängig gemacht ist.

4. Verfahren nach Anspruch 2 oder 3,
**dadurch gekennzeichnet,**
daß der maximale zeitliche Abstand für die Ermittlung der Summenprüfdaten und den Summenprüfdatenvergleich durch die zulässige Fehleroffenbarungszeit vorgegeben ist, die sich ergibt aus der dem Datenübertragungssystem eigenen MTBF.

5. Einrichtung zur einkanaligen Übertragung von Datentelegrammen von einer Datenquelle (BAR) zu einer Datensenke (R1, R2)
mit einem datenquellenseitigen Generator, der die aus Nutzdaten (U1, ..., Un) und diesen beigeordneten Prüfdaten (V1,..., Vn) bestehenden zu übertragenden Datentelegramme generiert,
**dadurch gekennzeichnet,**
daß die Datensenke (R1, R2) innerhalb eines vorgebbaren Zeitraumes über die übermittelten oder die von der Datensenke (R1, R2) ermittelten Prüfdaten (V1.1 bis Vn.1, V1.2 bis Vn.2) jeweils ein Sunmenprüfdatum (W1.1, W1.2) bildet und dieses an die Datenquelle übermittelt und daß die Datenquelle (BAR) diese Summenprüfdaten (W1.1, W1.2) von ihrem Inhalt her vergleicht mit jeweils einem an der Datenquelle (BAR) aus den dort bereitgestellten Prüfdaten (V1 bis Vn) in gleicher Weise abgeleiteten Summenprüfdatum (W1).

6. Einrichtung nach Anspruch 5,
**dadurch gekennzeichnet,**
daß die Datenquelle (BAR) als signaltechnisch sicherer und die Datensenke als signaltechnisch nicht sicherer Rechner oder signaltechnisch nicht sicheres Rechnersystem (R1, R2) ausgeführt sind und daß der Summenprufdatenvergleich im signaltechnisch sicheren Rechner (BAR) stattfindet.

7. Einrichtung nach Anspruch 5 oder 6,
**dadurch gekennzeichnet,**
daß sowohl die Datenquelle (BAR) als auch die Datensenke (R1, R2) als signaltechnisch nicht sicherer Rechner oder Rechnersystem ausgebildet sind und daß der Summenprüfdatenvergleich in einem signaltechnisch sicheren Vergleicher stattfindet.

8. Einrichtung zur Durchführung des Verfahrens nach einem der Ansprüche 5 bis 7,
**dadurch gekennzeichnet,**
daß sowohl die Datenquelle (BAR) als auch die Datensenke (R1, R2) als signaltechnisch nicht sicherer Rechner oder Rechnersystem ausgebildet sind und daß der Summenprüfdatenvergleich in dem oder in mindestens einem der Rechner stattfindet, die die senkeseitigen Summenprüfdaten ermitteln, und in mindestens einem Rechner außerhalb dieser Rechner.

9. Einrichtung nach einem der Ansprüche 5 bis 8,
**dadurch gekennzeichnet,**
daß in der Datensenke (R1, R2) für eine anschließende mehrkanalige Verarbeitung der übermittelten Daten eine Telegrammvervielfachung stattfindet und daß über die vervielfachten Prüfdaten (V1.1 bis Vn.1, V1.2 bis Vn.2) innerhalb der internen Verarbeitungskanale (K1, K2) gesonderte Summenprüfdaten (W1.1, W1.2) gebildet werden, die mit dem quellenseitig erstellten Summenprüfdatum (W1) verglichen werden.

10. Einrichtung nach einem der Ansprüche 5 bis 9,
**dadurch gekennzeichnet,**
daß zusätzlich zu den Summenprüfdatenvergleichen in dem oder in den senkeseitigen Rechnern (R1, R2) auch ein Vergleich der kanalspezifischen Prüfdaten (V1.1, V1.2) auf inhaltliche Übereinstimmung stattfindet.

11. Einrichtung nach einem der Ansprüche 5 bis 10,
**dadurch gekennzeichnet**, daß
senkeseitig innerhalb der einzelnen Rechner oder Rechnerkanäle eine Zuordnungsprüfung der übermittelten Prüfdaten (z. B. V1.1) zu den zugehörigen Nutzdaten (U1.1) stattfindet.

12. Einrichtung nach einem der Ansprüch 5 bis 11,
**dadurch gekennzeichnet**, daß den Datentelegrammen Sequenznummern beigegeben sind, deren Abfolge senkeseitig prüfbar ist.

## Claims

1. Method for the single-channel transmission of data telegrams from a data source to a data sink, with check data calculated from the useful data of the data telegrams being provided at the source end,
characterized in that an aggregate check datum (W1.1, W1.2) is formed in each case from the check data (V1.1 to Vn.1, V1.2 to Vn.2), which are communicated to the data sink (R1, R2) or are determined by the latter, within a predeterminable period of time, and in that these aggregate check data are compared in terms of their content with a respective aggregate check datum (W1), which is derived at the data source (BAR) from the check data (V1 to Vn) provided there.

2. Method according to Claim 1,
characterized in that the aggregate check data comparison is carried out in a time- and/or event-controlled manner.

3. Method according to Claim 2,
characterized in that in a system for outputting safety-critical commands as required, the execution of such commands is made dependent inter alia on the determination of the aggregate check data with subsequent comparison of the aggregate check data, which determination is carried out within the framework of the outputting of the commands.

4. Method according to Claim 2 or 3,
characterized in that the maximum time interval for the determination of the aggregate check data and the aggregate check data comparison is predetermined by the permissible error disclosure time, which results from the MTBF specific to the data transmission system.

5. Device for the single-channel transmission of data telegrams from a data source (BAR) to a data sink (R1, R2)
having a generator at the data source end which generates the data telegrams which are to be transmitted and comprise useful data (U1,..., Un) and check data (V1, ..., Vn) assigned thereto,
characterized in that the data sink (R1, R2) forms, within a predeterminable period of time, an aggregate check datum (W1.1, W1.2) in each case from the check data (V1.1 to Vn.1, V1.2 to Vn.2), communicated to or determined by the data sink (R1, R2), and communicates the said aggregate check datum to the data source, and in that the data source (BAR) compares these aggregate check data (W1.1, W1.2) in terms of their content with a respective aggregate check datum (W1), which is derived in the same way at the data source (BAR) from the check data (V1 to Vn) which are provided there.

6. Device according to Claim 5,
characterized in that the data source (BAR) is designed as a computer with signal protection and the data sink is designed as a computer without signal protection or a computer system (R1, R2) without signal protection, and in that the aggregate check data comparison takes place in the computer (BAR) with signal protection.

7. Device according to Claim 5 or 6,
characterized in that both the data source (BAR) and the data sink (R1, R2) are designed as a computer or computer system without signal protection, and in that the aggregate check data comparison takes place in a comparator with signal protection.

8. Device for carrying out the method according to one of Claims 5 to 7,
characterized in that both the data source (BAR) and the data sink (R1, R2) are designed as a computer or computer system without signal protection, and in that the aggregate check data comparison takes place in the computer or in at least one of the computers which determine the aggregate check data at the sink end and in at least one computer outside this computer.

9. Device according to one of Claims 5 to 8,
characterized in that telegram multiplication takes place in the data sink (R1, R2) for subsequent multi-channel processing of the communicated data, and in that separate aggregate check data (W1.1, W1.2) are formed from the multiplied check data (V1.1 to Vn.1, V1.2 to Vn.2) within the internal processing channels (K1, K2) and are compared with the aggregate check datum (W1) created at the source end.

10. Device according to one of Claims 5 to 9,
characterized in that a comparison of the channel-specific check data (V1.1, V1.2) for correspondence as regards content also takes place in addition to the aggregate check data comparisons in the computer or computers (R1, R2) at the sink end.

11. Device according to one of Claims 5 to 10,
characterized in that, at the sink end, an assignment check of the communicated check data (e.g. V1.1) with respect to the associated useful data (U1,1) takes place within the individual computers or computer channels,

12. Device according to one of Claims 5 to 11,
characterized in that the data telegrams are assigned sequential numbers whose sequence can be checked at the sink end.

## Revendications

1. Procédé pour transmettre sur un seul canal des télégrammes de données d'une source de données à un destinataire de données avec préparation côté source de données de contrôle calculées à partir des données utiles des télégrammes de données,
caractérisé en ce que l'on forme par l'intermédiaire des données (V1.1 à Vn.1, V1.2 à Vn.2) de contrôle transmises au destinataire (R1, R2) de données ou déterminées par lui, en l'espace d'un laps de temps pouvant être prescrit, respectivement une donnée (W1.1, W1.2) de contrôle somme et en ce que l'on compare ces données de contrôle somme en ce qui concerne leur contenu, chacune à une donnée (W1) de contrôle somme déduite, à la source (BAR) de données, des données (V1 à Vn) de contrôle qui y sont mises à disposition.

2. Procédé suivant la revendication 1,
caractérisé en ce que l'on effectue la comparaison de données de contrôle somme d'une manière commandée dans le temps et/ou d'une manière commandée par événement.

3. Procédé suivant la revendication 2,
caractérisé en ce que, dans un système servant à sortir en cas de besoin des commandes urgentes du point de vue de la sécurité, on rend l'exécution de commandes de ce genre dépendante entre autres d'une détermination des données de contrôle somme, avec comparaison qui suit des données de contrôle somme, effectuées dans le cadre de la sortie de commande.

4. Procédé suivant la revendication 2 ou 3,
caractérisé en ce que l'on prescrit la durée maximum pour déterminer les données de contrôle somme et pour comparer les données de contrôle somme par la durée de manifestation de défaillance qui ressort de la MTBF propre au système de transmission de données.

5. Dispositif pour transmettre sur un seul canal des télégrammes de données d'une source (BAR) de données à un destinataire (R1, R2) de données comportant un générateur côté source de données qui génère les télégrammes de données à transmettre constitués de données (U1,...., Un) utiles et de données (V1,..., Vn) de contrôle adjointes à ces données utiles,
caractérisé en ce que le destinataire (Ri, R2) de données forme, en l'espace d'un laps de temps pouvant être prescrit, par l'intermédiaire des données (V1.1 à Vn.1, V1.2 à Vn.2) transmises ou déterminées par le destinataire (R1, R2) de données, respectivement une donnée (W1.1; W1.2) de contrôle somme et la transmet à la source de données et en ce que la source (BAR) de données compare ces données (W1.1, W1.2) de contrôle somme du point de vue de leur contenu, chacune a une donnée (W1) de contrôle somme dérivée de la même manière, à la source (BAR) de données, des données (V1 à Vn) de contrôle qui y sont mises à disposition.

6. Dispositif suivant la revendication 5,
caractérisé en ce que la source (BAR) de données est réalisée en ordinateur, sûr du point de vue de la technique des signaux, et le destinataire de données en ordinateur qui n'est pas sûr du point de vue de la technique des signaux ou en système (R1, R2) d'ordinateurs qui n'est pas sûr du point de vue de la technique des signaux et en ce que la comparaison des données de contrôle somme a lieu dans l'ordinateur (BAR), sûr du point de vue de la technique des signaux.

7. Dispositif suivant la revendication 5 ou 6,
caractérisé en ce qu'aussi bien la source (BAR) de données que le destinataire (R1, R2) de données est réalisée en ordinateur ou en système d'ordinateurs qui ne sont pas sûrs du point de vue de la technique des signaux et en ce que la comparaison des données de contrôle somme a lieu dans un comparateur sûr du point de vue de la technique des signaux.

8. Dispositif pour mettre en oeuvre le procédé suivant l'une des revendications 5 à 7,
caractérisé en ce qu'aussi bien la source (BAR) de données que le destinataire (R1, R2) de données sont réalisés en ordinateur ou en système d'ordinateurs qui ne sont pas sûrs du point de vue de la technique des signaux et en ce que la comparaison des données de contrôle somme a lieu dans l'ordinateur ou dans au moins un ordinateur qui détermine les données de contrôle somme, côté destinataire, et dans au moins un ordinateur en dehors de ces ordinateurs.

9. Dispositif suivant l'une des revendications 5 à 8,
caractérisé en ce qu'il se produit dans le destinataire (R1, R2) de données, pour un traitement suivant sur plusieurs canaux des données transmises, une multiplication de télégrammes et en ce qu'il est formé. à l'intérieur des canaux (K1, K2) de traitement interne, par l'intermédiaire des données (V1.1 à Vn.1, V1.2 à Vn.2) de contrôle multipliées, des données (W1.1, W1.2) de contrôle somme distinctes qui sont comparées à la donnée (W1) de contrôle somme produite côté source.

10. Dispositif suivant l'une des revendications 5 à 9,
caractérisé en ce qu'il se produit dans l'ordinateur ou dans les ordinateurs (R1, R2), côté destinataire, en plus des comparaisons de données de contrôle somme, aussi une comparaison des données (V1.1, V1.2) de contrôle spécifique aux canaux en ce qui concerne la coïncidence des contenus.

11. Dispositif suivant l'une des revendications 5 à 10,
caractérisé en ce qu'il se produit, côté destinataire, à l'intérieur des ordinateurs ou des canaux d'ordinateurs individuels, un contrôle d'association des données par exemple (V1.1) de contrôle transmises aux données (U1.1) utiles associées.

12. Dispositif suivant l'une des revendications 5 à il,
caractérisé en ce qu'il est adjoint aux télégrammes de données des numéros consécutifs dont l'ordre peut être contrôlé côté destinataire.
